# EUROPEAN PATENT APPLICATION

(11) **EP 4 307 767 A1**
(43) Date of publication of application: **17.01.2024**
(21) Application number: 22778497.2
(22) Date of filing: 08.03.2022
(51) Int. Cl.: H04W 36/00

(54) **WIRELESS COMMUNICATION METHOD, APPARATUS AND SYSTEM**

(30) Priority: 01.04.2021 CN 202110356748
(71) Applicant: Huawei Technologies Co., Ltd., Longgang Shenzhen, Guangdong 518129 (CN)
(72) Inventor: QIAO, Yunfei, Shenzhen, Guangdong 518129 (CN); CHEN, Ying, Shenzhen, Guangdong 518129 (CN); WANG, Yu, Shenzhen, Guangdong 518129 (CN)
(74) Representative: Huawei European IPR
(86) International application number: PCT/CN2022/079785
(87) International publication number: WO 2022/206313

(57) **Abstract**

Embodiments of this application relate to the field of communication technologies, and provide a wireless communication method, an apparatus, and a system, to resolve the following technical problem: Communication of the terminal device is interrupted due to a large interruption delay when a terminal device frequently hands over between satellite cells in a satellite communication scenario; consequently, communication continuity of the terminal device is affected, and communication performance is poor. The method includes: A terminal device receives scheduling information from a source network device, and performs, based on the scheduling information, handover from the source network device to a target network device selected by the terminal device, where the scheduling information indicates X pieces of first resource information corresponding to X target network devices, an i^{th} first resource is a resource that is reserved by an i^{th} target network device for the terminal device and that is used to access the i^{th} target network device, X is greater than or equal to 1, and 1≤i≤X; and the target network device selected by the terminal device is one of the X target network devices.

## Description

This application claims priority to Chinese Patent Application No. 202110356748.5, filed with the China National Intellectual Property Administration on April 1, 2021 and entitled "WIRELESS COMMUNICATION METHOD, APPARATUS, AND SYSTEM", which is incorporated herein by reference in its entirety.

### TECHNICAL FIELD

This application relates to the field of communication technologies, and in particular, to a wireless communication method, an apparatus, and a system.

### BACKGROUND

In an existing communication system, when a terminal device in a connected mode performs cell handover, a source base station may send a handover message to the terminal device, so that the terminal device performs, based on the handover message, a random access process with a target cell configured by a target base station for the terminal device. In this way, the terminal device hands over from a source cell to the target cell, to complete the cell handover.

Currently, in a satellite communication scenario, because a satellite continuously moves at a high speed, a terminal device in a connected mode needs to frequently perform cell handover between different satellite cells, to ensure communication continuity of the terminal device. Because a distance between the terminal device and the satellite is long, and a round-trip delay is large, when the terminal device performs cell handover, a random access process between the terminal device and the target cell may cause a long interruption delay in the cell handover process due to the large round-trip delay, affecting communication continuity of the terminal device.

Because the random access process is to obtain a timing advance (timing advance, TA) of the target cell and an initial uplink grant of the target base station, to reduce the interruption delay caused by the random access process in the cell handover process, a Rach-less handover mechanism is proposed. The source base station may enable the target cell to obtain related information in advance by using another mechanism, msg1 and msg2 may be omitted, and the target cell directly sends msg3 to reduce the interruption delay.

However, in the satellite communication scenario, a timing relationship of an inter-satellite link cannot be stable due to relative motion between satellites. As a result, accuracy of the TA of the target cell is low, and the interruption delay in the cell handover process is affected. When the terminal device frequently hands over between satellite cells, communication of the terminal device is interrupted, communication continuity of the terminal device is affected, and communication performance of the communication system is poor.

### SUMMARY

In view of this, this application provides a wireless communication method, an apparatus, and a system, to resolve the following technical problem: Communication of the terminal device is interrupted due to a large interruption delay when a terminal device frequently hands over between satellite cells in a satellite communication scenario; consequently, communication continuity of the terminal device is affected, and communication performance is poor.

According to a first aspect, an embodiment of this application provides a wireless communication method, and the method includes: A terminal device receives scheduling information from a source network device, and performs, based on the scheduling information, handover from the source network device to a target network device selected by the terminal device, where the scheduling information indicates X pieces of first resource information corresponding to X target network devices, an i^{th} first resource is a resource that is reserved by an i^{th} target network device for the terminal device and that is used to access the i^{th} target network device, X is greater than or equal to 1, and 1≤i≤X; and the target network device selected by the terminal device is one of the X target network devices.

Based on the first aspect, a resource grant required when the terminal device hands over to the target network device may be obtained by the source network device from the target network device in advance, so that the terminal device can directly hand over, based on the scheduling information sent by the source network device, to the target network device selected by the terminal device, thereby avoiding a random access process between the terminal device and the target network device, ensuring communication continuity of the terminal device, and improving communication performance of a communication system.

In a possible design, the scheduling information further includes one or more types of the following information of each of the X target network devices: identification information, synchronization adjustment information, first information, and a modulation and coding scheme MCS, where the synchronization adjustment information is used by the terminal device to perform synchronization adjustment with a target network device corresponding to the synchronization adjustment information, and the first information indicates a handover moment at which the terminal device accesses a target network device corresponding to the first information.

Based on this possible design, the terminal device may complete, based on the scheduling information, synchronization between the terminal device and the target network device selected by the terminal device, and directly hand over to the target network device based on first resource information corresponding to the target network device selected by the terminal device in the scheduling information, thereby avoiding the random access process between the terminal device and the target network device, ensuring communication continuity of the terminal device, and improving communication performance of the communication system.

In a possible design, the scheduling information is carried in at least one of the following signaling: downlink control information DCI signaling, media access control control element MAC CE signaling, and radio resource control RRC signaling.

Based on this possible design, a new DCI format may be added to carry the scheduling information, a new field may be added to an existing DCI format to carry the scheduling information, or the scheduling information may be carried by using MAC CE or RRC signaling. This is not limited.

In a possible design, the terminal device selects one target network device based on one or more types of the following information of each of the X target network devices: signal quality, beam information of a downlink beam, and visual time corresponding to the terminal device, where the beam information of the downlink beam includes one or more types of the following information: identification information of the downlink beam and signal quality of the downlink beam.

Based on this possible design, the terminal device may select the proper target network device from the X target network devices based on the foregoing information, so that after the terminal device hands over to the target network device, communication continuity of the terminal device can be ensured, and communication performance of the communication system can be improved.

In a possible design, before that a terminal device receives scheduling information from a source network device, the method further includes: The terminal device sends second information to the source network device, where the second information indicates Y target network devices, and Y is greater than or equal to X.

Based on this possible design, the terminal device may further indicate the target network device to the source network device, so that the source network device determines the scheduling information based on the target network device specified by the terminal device.

In a possible design, the second information includes one or more types of the following information of each of the Y target network devices: identification information, signal quality, and beam information of a downlink beam, where the beam information of the downlink beam includes one or more types of the following information: identification information of the downlink beam and signal quality of the downlink beam.

Based on this possible design, the terminal device may send the second information to the source network device, to indicate, to the source network device, the target network device specified by the terminal device.

In a possible design, the terminal device sends third information to the source network device, where the third information indicates the terminal device to hand over to the target network device selected by the terminal device.

Based on this possible design, the terminal device notifies the source network device that the terminal device has handed over to the target network device, so that the source network device can release a communication connection to the terminal device, reduce signaling overheads, and reduce communication load of the source network device.

According to a second aspect, an embodiment of this application provides a terminal device. The terminal device can implement a function performed by the terminal device in the first aspect or the possible design of the first aspect, and the function may be implemented by executing corresponding software by hardware. The hardware or software includes one or more modules corresponding to the foregoing functions, such as an input module and a processing module. The input module is configured to receive scheduling information from a source network device. The processing module is configured to perform, based on the scheduling information, handover from the source network device to a target network device selected by the processing module. The scheduling information indicates X pieces of first resource information corresponding to X target network devices, an i^{th} first resource is a resource that is reserved by an i^{th} target network device for the terminal device and that is used to access the i^{th} target network device, X is greater than or equal to 1, and 1≤i≤X; and the target network device selected by the processing module is one of the X target network devices.

In a possible design, the scheduling information further includes one or more types of the following information of each of the X target network devices: identification information, synchronization adjustment information, first information, and a modulation and coding scheme MCS, where the synchronization adjustment information is used by the terminal device to perform synchronization adjustment with a target network device corresponding to the synchronization adjustment information, and the first information indicates a handover moment at which the terminal device accesses a target network device corresponding to the first information.

In a possible design, the scheduling information is carried in at least one of the following signaling: downlink control information DCI signaling, media access control control element MAC CE signaling, and radio resource control RRC signaling.

In a possible design, the processing module is further configured to select one target network device based on one or more types of the following information of each of the X target network devices: signal quality, beam information of a downlink beam, and visual time corresponding to the terminal device, where the beam information of the downlink beam includes one or more types of the following information: identification information of the downlink beam and signal quality of the downlink beam.

In a possible design, the terminal device further includes an output module. Before the input module receives the scheduling information from the source network device, the output module is configured to send second information to the source network device, where the second information indicates Y target network devices, and Y is greater than or equal to X.

In a possible design, the second information includes one or more types of the following information of each of the Y target network devices: identification information, signal quality, and beam information of a downlink beam, where the beam information of the downlink beam includes one or more types of the following information: identification information of the downlink beam and signal quality of the downlink beam.

In a possible design, the output module is further configured to send third information to the source network device, where the third information indicates the terminal device to hand over to the target network device selected by the terminal device.

It should be noted that for a specific implementation of the terminal device, refer to a behavior function of the terminal device in the wireless communication method provided in any one of the first aspect or the possible designs of the first aspect. For a technical effect brought by the terminal device, refer to a technical effect brought by any one of the possible designs of the first aspect. This is not repeated.

According to a third aspect, an embodiment of this application provides a terminal device. The terminal device may be a terminal device, or a chip or a system on chip in the terminal device. The terminal device may implement functions performed by the terminal device in the foregoing aspects or the possible designs, and the functions may be implemented by hardware. In a possible design, the terminal device may include a transceiver and a processor. The transceiver and the processor may be configured to support the terminal device in implementing the functions in any one of the first aspect or the possible designs of the first aspect. For example, the transceiver may be configured to receive scheduling information from a source network device, and the processor may be configured to perform, based on the scheduling information, handover from the source network device to a target network device selected by the terminal device. The scheduling information indicates X pieces of first resource information corresponding to X target network devices, an i^{th} first resource is a resource that is reserved by an i^{th} target network device for the terminal device and that is used to access the i^{th} target network device, X is greater than or equal to 1, and 1≤i≤X. The target network device selected by the processing module is one of the X target network devices. In still another possible design, the terminal device may further include a memory, and the memory is configured to store computer-executable instructions and data that are necessary for the terminal device. When the terminal device runs, the transceiver and the processor execute the computer-executable instructions stored in the memory, so that the terminal device performs the wireless communication method according to any one of the first aspect or the possible designs of the first aspect.

For a specific implementation of the terminal device in the third aspect, refer to a behavior function of the terminal device in the wireless communication method provided in any one of the first aspect or the possible designs of the first aspect.

According to a fourth aspect, an embodiment of this application provides a wireless communication method, and the method may include: A source network device sends, by using Y second resources, Y grant request messages to Y target network devices corresponding to the Y second resources, where a j^{th} second resource is a resource that is reserved by a j^{th} target network device and that is used to receive a j^{th} grant request message, Y is greater than or equal to 1, and 1≤j≤Y. The source network device receives Y grant request acknowledgment messages from the Y target network devices, where a j^{th} grant request acknowledgment message indicates a grant of the j^{th} target network device for a j^{th} first resource, and the j^{th} first resource is a resource that is reserved by the j^{th} target network device for a terminal device and that is used to access the j^{th} target network device. The source network device sends scheduling information to the terminal device, where the scheduling information indicates first resource information corresponding to at least one target network device.

Based on the fourth aspect, a resource grant required when the terminal device hands over to the target network device may be obtained by the source network device from the target network device in advance, so that the terminal device can directly hand over, based on the scheduling information sent by the source network device, to a target network device selected by the terminal device, thereby avoiding a random access process between the terminal device and the target network device, ensuring communication continuity of the terminal device, and improving communication performance of a communication system.

In a possible design, before that a source network device sends, by using Y second resources, Y grant request messages to Y target network devices corresponding to the Y second resources, the method further includes: The source network device obtains Y first timing offsets between the source network device and the Y target network devices, where a j^{th} first timing offset is a timing offset between the source network device and the j^{th} target network device.

In a possible design, the source network device sends Y synchronization requests to the Y target network devices based on communication parameters of the terminal device. The source network device receives the Y first timing offsets from the Y target network devices.

In a possible design, the source network device receives Y second timing offsets from the Y target network devices, where a j^{th} second timing offset is a timing offset between the j^{th} target network device and an absolute time; and the source network device determines the Y first timing offsets based on the Y second timing offsets and a timing offset between the source network device and the absolute time.

Based on the foregoing three possible designs, the source network device may obtain the Y first timing offsets between the source network device and the Y target network devices, so that the source network device can update time-frequency relationships between the source network device and the Y target network devices based on the Y first timing offsets.

In a possible design, the scheduling information further includes one or more types of the following information of each of the at least one target network device: identification information, synchronization adjustment information, first information, and a modulation and coding scheme MCS, where the synchronization adjustment information is used by the terminal device to perform synchronization adjustment with a target network device corresponding to the synchronization adjustment information, and the first information indicates a handover moment at which the terminal device accesses a target network device corresponding to the first information.

Based on this possible design, the source network device sends the scheduling information to the terminal device, so that the terminal device may complete, based on the scheduling information, synchronization between the terminal device and the target network device selected by the terminal device, and directly hand over to the target network device based on first resource information corresponding to the target network device selected by the terminal device in the scheduling information, thereby avoiding the random access process between the terminal device and the target network device, ensuring communication continuity of the terminal device, and improving communication performance of the communication system.

In a possible design, the scheduling information is carried in at least one of the following signaling: downlink control information DCI signaling, media access control control element MAC CE signaling, and radio resource control RRC signaling.

Based on this possible design, a new DCI format may be added to carry the scheduling information, a new field may be added to an existing DCI format to carry the scheduling information, or the scheduling information may be carried by using MAC CE or RRC signaling. This is not limited.

In a possible design, before that a source network device sends, by using Y second resources, Y grant request messages to Y target network devices corresponding to the Y second resources, the method further includes: The source network device determines the Y target network devices based on the communication parameters of the terminal device; the source network device determines the Y target network devices based on load of the network device; or the source network device receives second information from the terminal device, where the second information indicates the Y target network devices.

Based on this possible design, the source network device may determine the Y target network devices based on the communication parameters of the terminal device, determine the Y target network devices based on the load of the network device, or determine the Y target network devices based on an indication of the terminal device. A plurality of feasible solutions are provided for determining the Y target network devices for the source network device.

In a possible design, the second information includes one or more types of the following information of each of the Y target network devices: identification information, signal quality, and beam information of a downlink beam, where the beam information of the downlink beam includes one or more types of the following information: identification information of the downlink beam and signal quality of the downlink beam.

Based on this possible design, the source network device may determine, based on the second information, a target network device specified by the terminal device.

In a possible design, the source network device obtains third information, where the third information indicates the terminal device to hand over to the target network device selected by the terminal device.

Based on this possible design, the source network device may determine, by using the third information, that the terminal device has handed over to the target network device, to release a communication connection to the terminal device, reduce signaling overheads, and reduce communication load of the source network device.

According to a fifth aspect, an embodiment of this application provides a source network device. The source network device may implement a function performed by the source network device in the fourth aspect or the possible design of the fourth aspect, and the function may be implemented by executing corresponding software by hardware. The hardware or software includes one or more modules corresponding to the foregoing functions, such as an input module, an output module, and a generation module. The output module may be configured to output, by using Y second resources, Y grant request messages corresponding to Y target network devices, where a j^{th} second resource is a resource that is reserved by a j^{th} target network device and that is used to receive a j^{th} grant request message, Y is greater than or equal to 1, and 1≤j≤Y. The input module is configured to receive Y grant request acknowledgment messages from the Y target network devices, where a j^{th} grant request acknowledgment message indicates a grant of the j^{th} target network device for a j^{th} first resource, and the j^{th} first resource is a resource that is reserved by the j^{th} target network device for a terminal device and that is used to access the j^{th} target network device. The generation module is configured to generate scheduling information, where the scheduling information indicates first resource information corresponding to at least one target network device. The output module is further configured to output the scheduling information.

In a possible design, before the output module outputs, by using the Y second resources, the Y grant request messages corresponding to the Y target network devices, the input module is further configured to obtain Y first timing offsets between the source network device and the Y target network devices, where a j^{th} first timing offset is a timing offset between the source network device and the j^{th} target network device.

In a possible design, the output module is further configured to output, based on communication parameters of the terminal device, Y synchronization requests corresponding to the Y target network devices. The input module is further configured to receive the Y first timing offsets from the Y target network devices.

In a possible design, the source network device may further include a processing module, and the input module is further configured to receive Y second timing offsets from the Y target network devices, where a j^{th} second timing offset is a timing offset between the j^{th} target network device and an absolute time. The processing module is configured to determine the Y first timing offsets based on the Y second timing offsets and a timing offset between the source network device and the absolute time.

In a possible design, the scheduling information further includes one or more types of the following information of each of the at least one target network device: identification information, synchronization adjustment information, first information, and a modulation and coding scheme MCS, where the synchronization adjustment information is used by the terminal device to perform synchronization adjustment with a target network device corresponding to the synchronization adjustment information, and the first information indicates a handover moment at which the terminal device accesses a target network device corresponding to the first information.

In a possible design, the scheduling information is carried in at least one of the following signaling: downlink control information DCI signaling, media access control control element MAC CE signaling, and radio resource control RRC signaling.

In a possible design, before the output module outputs, by using the Y second resources, the Y grant request messages corresponding to the Y target network devices, the processing module is further configured to determine the Y target network devices based on the communication parameters of the terminal device; the processing module is further configured to determine the Y target network devices based on load of the network device; or the input module is further configured to receive second information from the terminal device, where the second information indicates the Y target network devices.

In a possible design, the second information includes one or more types of the following information of each of the Y target network devices: identification information, signal quality, and beam information of a downlink beam, where the beam information of the downlink beam includes one or more types of the following information: identification information of the downlink beam and signal quality of the downlink beam.

In a possible design, the input module is further configured to obtain third information, where the third information indicates the terminal device to hand over to the target network device selected by the terminal device.

It should be noted that for a specific implementation of the source network device, refer to a behavior function of the source network device in the wireless communication method provided in any one of the fourth aspect or the possible designs of the fourth aspect. For a technical effect brought by the source network device, refer to a technical effect brought by any one of the possible designs of the fourth aspect. This is not repeated.

According to a sixth aspect, an embodiment of this application provides a source network device. The source network device may be a source network device, or a chip or a system on chip in the source network device. The source network device may implement functions performed by the source network device in the foregoing aspects or the possible designs, and the functions may be implemented by hardware. In a possible design, the source network device may include a transceiver. The transceiver may be configured to support the source network device in implementing the functions in any one of the fourth aspect or the possible designs of the fourth aspect. For example, the transceiver may be configured to send, by using Y second resources, Y grant request messages to Y target network devices corresponding to the Y second resources, where a j^{th} second resource is a resource that is reserved by a j^{th} target network device and that is used to receive a j^{th} grant request message, Y is greater than or equal to 1, and 1≤j≤Y. The transceiver is further configured to receive Y grant request acknowledgment messages from the Y target network devices, where a j^{th} grant request acknowledgment message indicates a grant of the j^{th} target network device for a j^{th} first resource, and the j^{th} first resource is a resource that is reserved by the j^{th} target network device for a terminal device and that is used to access the j^{th} target network device. The transceiver is further configured to send scheduling information to the terminal device, where the scheduling information indicates first resource information corresponding to at least one target network device. In still another possible design, the source network device may further include a processor and a memory. The memory is configured to store computer-executable instructions and data that are necessary for the source network device. When the source network device runs, the transceiver and the processor execute the computer-executable instructions stored in the memory, so that the source network device performs the wireless communication method according to any one of the fourth aspect or the possible designs of the fourth aspect.

For a specific implementation of the source network device in the sixth aspect, refer to a behavior function of the source network device in the wireless communication method provided in any one of the fourth aspect or the possible designs of the fourth aspect.

According to a seventh aspect, an embodiment of this application provides a wireless communication method, and the method may include: A target network device receives a grant request message from a source network device by using a second resource, where the second resource is a resource that is reserved by the target network device and that is used to receive the grant request message; and the target network device sends a grant request acknowledgment message to the source network device, where the grant request acknowledgment message indicates a grant of the target network device for a first resource, and the first resource is a resource that is reserved by the target network device for a terminal device and that is used to access the target network device.

Based on the seventh aspect, a resource grant required when the terminal device hands over to the target network device may be obtained by the source network device from the target network device in advance, so that the terminal device can directly hand over, based on the scheduling information sent by the source network device, to a target network device selected by the terminal device, thereby avoiding a random access process between the terminal device and the target network device, ensuring communication continuity of the terminal device, and improving communication performance of a communication system.

In a possible design, before that a target network device receives a grant request message from a source network device by using a second resource, the method further includes: The target network device receives a synchronization request from the source network device, where the synchronization request is determined by the source network device based on a communication parameter of the terminal device; and the target network device sends a first timing offset to the source network device based on the synchronization request, where the first timing offset is a timing offset between the source network device and the target network device.

In a possible design, before that a target network device receives a grant request message from a source network device by using a second resource, the method further includes: The target network device sends a second timing offset to the source network device, where the second timing offset is a timing offset between the target network device and an absolute time.

Based on the foregoing two possible designs, the source network device may obtain the first timing offset between the source network device and the target network device, so that the source network device can update a time-frequency relationship between the source network device and the target network device based on the first timing offset.

In a possible design, the target network device receives an access request from the terminal device, where the access request is determined by the terminal device based on scheduling information, and the scheduling information indicates first resource information corresponding to the target network device; and the target network device establishes a communication connection to the terminal device based on the access request.

Based on this possible design, the terminal device can directly hand over, based on the scheduling information sent by the source network device, to the target network device selected by the terminal device, thereby avoiding the random access process between the terminal device and the target network device, ensuring communication continuity of the terminal device, and improving communication performance of the communication system.

In a possible design, the scheduling information further includes one or more types of the following information of the target network device: identification information, synchronization adjustment information, first information, and a modulation and coding scheme MCS, where the synchronization adjustment information is used by the terminal device to perform synchronization adjustment with a target network device corresponding to the synchronization adjustment information, and the first information indicates a handover moment at which the terminal device accesses a target network device corresponding to the first information.

Based on this possible design, the terminal device may complete, based on the scheduling information, synchronization between the terminal device and the target network device selected by the terminal device, and directly hand over to the target network device based on first resource information corresponding to the target network device selected by the terminal device in the scheduling information, thereby avoiding the random access process between the terminal device and the target network device, ensuring communication continuity of the terminal device, and improving communication performance of the communication system.

In a possible design, the target network device sends third information to the source network device, where the third information indicates the terminal device to hand over to the target network device.

Based on this possible design, the target network device notifies the source network device that the terminal device has handed over to the target network device, so that the source network device can release a communication connection to the terminal device, reduce signaling overheads, and reduce communication load of the source network device.

According to an eighth aspect, an embodiment of this application provides a target network device. The target network device may implement a function performed by the target network device in the seventh aspect or the possible design of the seventh aspect, and the function may be implemented by executing corresponding software by hardware. The hardware or software includes one or more modules corresponding to the foregoing functions, such as an input module and an output module. The input module is configured to receive a grant request message from a source network device, where a second resource is a resource that is reserved by the target network device and that is used to receive the grant request message. The output module is configured to output a grant request acknowledgment message, where the grant request acknowledgment message indicates a grant of the target network device for a first resource, and the first resource is a resource that is reserved by the target network device for a terminal device and that is used to access the target network device.

In a possible design, before the input module receives the grant request message from the source network device by using the second resource, the input module is further configured to receive a synchronization request from the source network device, where the synchronization request is determined by the source network device based on a communication parameter of the terminal device. The output module is further configured to output a first timing offset based on the synchronization request, where the first timing offset is a timing offset between the source network device and the target network device.

In a possible design, before the input module receives the grant request message from the source network device by using the second resource, the output module is further configured to output a second timing offset, where the second timing offset is a timing offset between the target network device and an absolute time.

In a possible design, the target network device further includes a processing module, and the input module is further configured to receive an access request from the terminal device, where the access request is determined by the terminal device based on scheduling information, and the scheduling information indicates first resource information corresponding to the target network device. The processing module is configured to establish a communication connection to the terminal device based on the access request.

In a possible design, the scheduling information further includes one or more types of the following information of the target network device: identification information, synchronization adjustment information, first information, and a modulation and coding scheme MCS, where the synchronization adjustment information is used by the terminal device to perform synchronization adjustment with a target network device corresponding to the synchronization adjustment information, and the first information indicates a handover moment at which the terminal device accesses a target network device corresponding to the first information.

In a possible design, the output module is further configured to output third information, where the third information indicates the terminal device to hand over to a target network device.

It should be noted that for a specific implementation of the target network device, refer to a behavior function of the target network device in the wireless communication method provided in any one of the seventh aspect or the possible designs of the seventh aspect. For a technical effect brought by the target network device, refer to a technical effect brought by any one of the possible designs of the seventh aspect. This is not repeated.

According to a ninth aspect, an embodiment of this application provides a target network device. The target network device may be a target network device, or a chip or a system on chip in the target network device. The target network device may implement functions performed by the target network device in the foregoing aspects or the possible designs, and the functions may be implemented by hardware. In a possible design, the target network device may include a transceiver. The transceiver may be configured to support the target network device in implementing the functions in any one of the seventh aspect or the possible designs of the seventh aspect. For example, the transceiver may be configured to receive a grant request message from a source network device, where a second resource is a resource that is reserved by the target network device and that is used to receive the grant request message. The transceiver may be further configured to send a grant request acknowledgment message to the source network device, where the grant request acknowledgment message indicates a grant of the target network device for a first resource. The first resource is a resource that is reserved by the target network device for the terminal device and that is used to access the target network device. In still another possible design, the target network device may further include a processor and a memory. The memory is configured to store computer-executable instructions and data that are necessary for the target network device. When the target network device runs, the transceiver and the processor execute the computer-executable instructions stored in the memory, so that the target network device performs the wireless communication method according to any one of the seventh aspect or the possible designs of the seventh aspect.

For a specific implementation of the target network device in the ninth aspect, refer to a behavior function of the target network device in the wireless communication method provided in any one of the seventh aspect or the possible designs of the seventh aspect.

According to a tenth aspect, a communication apparatus is provided. The communication apparatus includes one or more processors, where the one or more processors are configured to run a computer program or instructions. When the one or more processors execute the computer program or the instructions, so that the communication apparatus performs the wireless communication method according to any one of the first aspect or the possible designs of the first aspect, perform the wireless communication method according to any one of the fourth aspect or the possible designs of the fourth aspect, or perform the wireless communication method according to any one of the seventh aspect or the possible designs of the seventh aspect.

In a possible design, the communication apparatus further includes one or more communication interfaces. The one or more communication interfaces are coupled to one or more processors, and the one or more communication interfaces are configured to communicate with another module other than the communication apparatus.

In a possible design, the communication apparatus further includes one or more memories, the one or more memories are coupled to the one or more processors, and the one or more memories are configured to store the foregoing computer program or the instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together.

According to an eleventh aspect, a communication apparatus is provided. The communication apparatus includes an interface circuit and a logic circuit. The interface circuit is coupled with the logic circuit. The logic circuit is configured to perform the wireless communication method according to any one of the first aspect or the possible designs of the first aspect, perform the wireless communication method according to any one of the fourth aspect or the possible designs of the fourth aspect, or perform the wireless communication method according to any one of the seventh aspect or the possible designs of the seventh aspect. The interface circuit is configured to communicate with another module other than the communication apparatus.

According to a twelfth aspect, a computer-readable storage medium is provided. The computer-readable storage medium stores computer instructions or a program, and when the computer instructions or the program are/is run on a computer, the computer is enabled to perform the wireless communication method according to any one of the first aspect or the possible designs of the first aspect, perform the wireless communication method according to any one of the fourth aspect or the possible designs of the fourth aspect, or perform the wireless communication method according to any one of the seventh aspect or the possible designs of the seventh aspect.

According to a thirteenth aspect, a computer program product including computer instructions is provided. When the computer program product runs on a computer, the computer is enabled to perform the wireless communication method according to any one of the first aspect or the possible designs of the first aspect, perform the wireless communication method according to any one of the fourth aspect or the possible designs of the fourth aspect, or perform the wireless communication method according to any one of the seventh aspect or the possible designs of the seventh aspect.

According to a fourteenth aspect, an embodiment of this application provides a computer program. When the computer program is run on a computer, the computer is enabled to perform the wireless communication method according to any one of the first aspect or the possible designs of the first aspect, perform the wireless communication method according to any one of the fourth aspect or the possible designs of the fourth aspect, or perform the wireless communication method according to any one of the seventh aspect or the possible designs of the seventh aspect.

For a technical effect brought by any design manner of the tenth aspect to the fourteenth aspect, refer to a technical effect brought by any possible design of the first aspect, refer to a technical effect brought by any possible design of the fourth aspect, or refer to a technical effect brought by any possible design of the seventh aspect. Details are not described again.

According to a fifteenth aspect, a communication system is provided. The communication system includes the terminal device according to any one of the second aspect and the third aspect, the source network device according to any one of the fifth aspect and the sixth aspect, and the target network device according to any one of the eighth aspect and the ninth aspect.

### BRIEF DESCRIPTION OF DRAWINGS

FIG. 1a is a schematic diagram of a communication system according to an embodiment of this application;
FIG. 1b is a schematic diagram of a communication system according to an embodiment of this application;
FIG. 1c is a schematic diagram of a communication system according to an embodiment of this application;
FIG. 1d is a schematic diagram of a communication system according to an embodiment of this application;
FIG. 2 is a schematic composition diagram of a communication apparatus according to an embodiment of this application;
FIG. 3 is a flowchart of a wireless communication method according to an embodiment of this application;
FIG. 4 is a flowchart of a method for determining a target network device according to an embodiment of this application;
FIG. 5 is a flowchart of a method for determining a target network device according to an embodiment of this application;
FIG. 6 is a schematic diagram of a frame structure of scheduling information according to an embodiment of this application;
FIG. 7 is a schematic diagram of a frame structure of scheduling information according to an embodiment of this application;
FIG. 8 is a flowchart of a wireless communication method according to an embodiment of this application;
FIG. 9 is a schematic composition diagram of a terminal device according to an embodiment of this application;
FIG. 10 is a schematic composition diagram of a source network device according to an embodiment of this application; and
FIG. 11 is a schematic composition diagram of a target network device according to an embodiment of this application.

### DESCRIPTION OF EMBODIMENTS

Before embodiments of this application are described, technical terms in embodiments of this application are described.

Cell handover is a process in which a terminal device changes a cell connection in a communication process.

Specifically, when a terminal device in a connected mode performs cell handover, a source network device may send a handover message to the terminal device, so that the terminal device performs, based on the handover message, a random access process with a target cell configured by a target network device for the terminal device. In this way, the terminal device hands over from a source cell to the target cell, to complete the cell handover.

The handover message may include a parameter that is configured by the target network device for the terminal device and that is required for accessing the target cell. For example, the handover message may include information about the target cell, a cell radio network temporary identifier (cell radio network temporary identifier, C-RNTI) allocated by the target cell to the terminal device, random access channel (random access channel, RACH) resource information required for accessing the target cell, and the like.

The information about the target cell may include a physical cell identifier (physical cell identifier, PCI) of the target cell and frequency information corresponding to the target cell. The RACH resource information required for accessing the target cell may be a dedicated RACH resource and/or a common RACH resource.

For example, for a new radio (new radio, NR) system to which a beam characteristic is introduced, when configuring the RACH resource information required for accessing the target cell, a network may configure a contention-free random access (contention-free random access, CFRA) resource associated with a beam in the target cell. The terminal device may perform a contention-free random access process with the target cell by using the CFRA resource. If the CFRA resource fails to be configured or the CFRA resource is not configured, the terminal device may perform contention-based random access (contention-based random access, CBRA) with the target cell.

The beam in the target cell may be a static shared beam (static shared beam, SSB), a channel state information reference signal (channel state information reference signal, CSI-RS), or the like. This is not limited. The CFRA resource may include a preamble index and a time-frequency resource, and the CFRA resource may also be described as a dedicated RACH resource.

For example, the handover message may be a radio resource control (radio resource control, RRC) message. In a long term evolution (long term evolution, LTE) system, the RRC message may be an RRC reconfiguration message that carries a synchronous reconfiguration (reconfiguration with synchronous) information element. In the NR system, the RRC message may be an RRC connection reconfiguration message that carries a mobility control information (mobility control information) information element.

With the development of information technology, a communication system proposes more urgent requirements for high efficiency, mobility, and diversity of communication. At present, a satellite plays an irreplaceable role in some important fields, such as space communication, aviation communication, maritime communication, and military communication. Satellite communication has characteristics of long communication distance, large coverage area, and flexible networking. The satellite communication can provide services for both a fixed terminal device and various mobile terminal devices.

Because a conventional terrestrial network cannot provide seamless coverage for a terminal device, especially in places where a network device cannot be deployed, such as seas, deserts, or the air, a non-terrestrial communication network (non-terrestrial network, NTN) is introduced into the communication system. The NTN network provides seamless coverage for the terminal device by deploying a network device or some functions of the network device on a high-altitude platform or a satellite. In addition, the high-altitude platform or the satellite is less subject to natural disasters, thereby improving reliability of the communication system.

In a satellite communication scenario, because a satellite (for example, a non-geostationary earth orbit (non-geostationary earth orbit, NGEO) satellite) continuously moves at a high speed, a terminal device in a connected mode needs to frequently perform cell handover between different satellite cells, to ensure communication continuity of the terminal device.

However, because a distance between the terminal device and the satellite is long, and a round-trip delay is large, when the terminal device performs cell handover, a random access process between the terminal device and the target cell may cause a long interruption delay in the cell handover process due to the large round-trip delay, affecting communication continuity of the terminal device.

Because the random access process is to obtain a timing advance (timing advance, TA) of the target cell and an initial uplink grant of the target network device, to reduce the interruption delay caused by the random access process in the cell handover process, a Rach-less handover mechanism is proposed. The source network device may enable the target cell to obtain related information in advance by using another mechanism, msg1 and msg2 in the random access process may be omitted, and the target cell directly sends msg3 to reduce the interruption delay.

However, in the satellite communication scenario, a timing relationship of an inter-satellite link cannot be stable due to relative motion between satellites. As a result, accuracy of the TA of the target cell is low, and the interruption delay in the cell handover process is affected. When the terminal device frequently hands over between satellite cells, communication of the terminal device is interrupted, communication continuity of the terminal device is affected, and communication performance of the communication system is poor.

To resolve this problem, embodiments of this application provide a wireless communication method, an apparatus, and a system. A terminal device may receive scheduling information from a source network device, and perform, based on the scheduling information, handover from the source network device to a target network device selected by the terminal device. The scheduling information may indicate X pieces of first resource information corresponding to X target network devices, an i^{th} first resource is a resource that is reserved by an i^{th} target network device for the terminal device and that is used to access the i^{th} target network device, X is greater than or equal to 1, and 1≤i≤X. The target network device selected by the processing module is one of the X target network devices. In embodiments of this application, a resource grant required when the terminal device hands over to the target network device may be obtained by the source network device from the target network device in advance, so that the terminal device can directly hand over, based on the scheduling information sent by the source network device, to the target network device selected by the terminal device, thereby avoiding a random access process between the terminal device and the target network device, ensuring communication continuity of the terminal device, and improving communication performance of a communication system.

The following describes implementations of embodiments of this application in detail with reference to accompanying drawings in this specification.

The wireless communication method provided in this embodiment of this application may be used in any communication system. The communication system may be a third generation partnership project (third generation partnership project, 3GPP) communication system, for example, a long term evolution (long term evolution, LTE) system; may be a fifth generation (fifth generation, 5G) mobile communication system, a new radio (new radio, NR) system, an NR V2X system, and various types of next-generation communication systems; or may be a non-3GPP communication system. This is not limited.

The wireless communication method provided in this embodiment of this application may be applied to various communication scenarios, for example, may be applied to one or more of the following communication scenarios: enhanced mobile broadband (enhanced mobile broadband, eMBB), ultra-reliable low latency communication (ultra-reliable low latency communication, URLLC), machine type communication (machine type communication, MTC), massive machine type communication (massive machine type communication, mMTC), device to device (device to device, D2D), vehicle to everything (vehicle to everything, V2X), vehicle to vehicle (vehicle to vehicle, V2V), and the internet of things (internet of things, IoT), and the like.

The wireless communication method provided in this embodiment of this application may be further applied to a long-distance communication scenario, for example, applied to a satellite communication scenario in which a distance between a terminal device and a network device continuously changes or to another long-distance communication scenario. This is not limited.

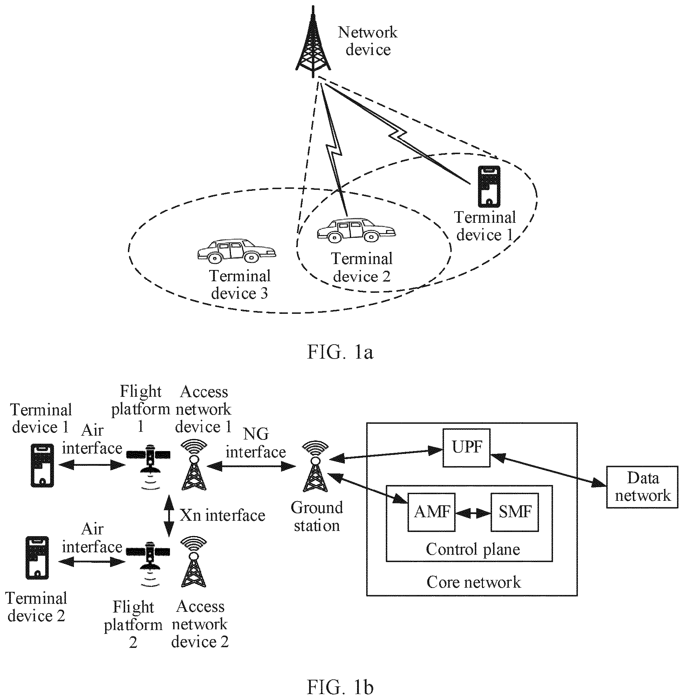

FIG. 1a is used as an example in the following to describe the wireless communication method provided in this embodiment of this application.

FIG. 1a is a schematic diagram of a communication system according to an embodiment of this application. As shown in FIG. 1a, for example, the communication system is an NTN communication system. The NTN communication system may include at least one terminal device and a plurality of network devices.

In FIG. 1a, the terminal device may be located in beam/cell coverage of the network device, and the network device may provide a communication service for the terminal device. For example, the network device may encode downlink data through channel coding, and transmit downlink data to the terminal device through an air interface after constellation modulation. Alternatively, the terminal device may encode uplink data through channel coding, and send uplink data to the network device through an air interface after constellation modulation.

The terminal device (terminal) in FIG. 1a may be a terminal device that supports a new air interface, and may access an NTN system through an air interface, and initiate services such as a call and internet access. The terminal device may also be referred to as user equipment (user equipment, UE), a mobile station (mobile station, MS), a mobile terminal (mobile terminal, MT), or the like. Specifically, the terminal device in FIG. 1a may be a mobile phone (mobile phone), a smartwatch, a tablet computer, or a computer with a wireless transceiver function. Alternatively, the terminal device may be a virtual reality (virtual reality, VR) terminal, an augmented reality (augmented reality, AR) terminal, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

For example, refer to FIG. 1b. The network device may be an access network device mounted on a flight platform. When the access network device is mounted on the flight platform, the communication system shown in FIG. 1a may be a communication architecture shown in FIG. 1b. As shown in FIG. 1b, when the access network device moves synchronously with the flight platform, the access network device and the flight platform may be considered as a whole. In this case, the flight platform may be considered as the access network device, or may be described as that the flight platform works in a regenerative (regenerative) mode, that is, the flight platform has a function of the access network device. In addition, a communication link between the flight platform and the terminal device may be referred to as a service link (service link). When the communication system includes a plurality of flight platforms, signaling interaction and data transmission may be performed between the flight platforms through an Xn interface.

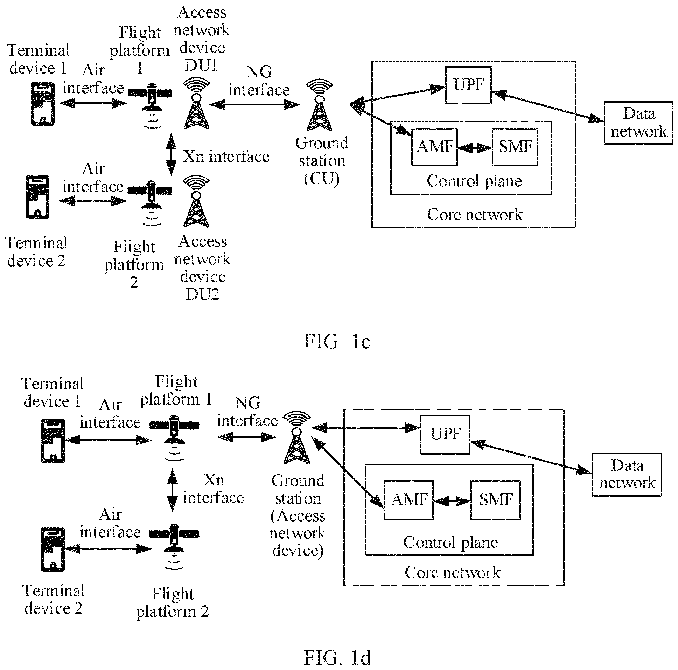

In another example, refer to FIG. 1c. The network device may be an access network device that is distributedly mounted on a flight platform based on a distributed unit (distributed unit, DU). When the access network device is distributedly mounted on the flight platform based on the DU, the communication system shown in FIG. 1a may be a communication architecture shown in FIG. 1c. As shown in FIG. 1c, the access network device may include an access network device DU and an access network device central unit (central unit, CU). The access network device DU may be mounted on the flight platform, the access network device CU may be disposed on the ground, and the access network device DU and the access network device CU may communicate with each other through a next generation (next generation, NG) interface. The terminal device may establish a communication connection to the access network device CU by using the access network device DU. In this case, the flight platform may be considered as a part of the access network device, or may be described as that the flight platform works in a regenerative mode, that is, the flight platform has a function of the part of the access network device. In addition, when the communication system includes a plurality of flight platforms, signaling interaction and data transmission may be performed between the flight platforms through an Xn interface, and a communication link between the flight platform and the terminal device may be referred to as a service link. A communication link between the flight platform and the access network device CU is referred to as a feeder link (feeder link). It should be noted that the communication architecture in FIG. 1c may be considered as a special case of the communication architecture shown in FIG. 1b. In FIG. 1c, the access network device CU may also be described as a gateway (gateway), a ground station, or the like. This is not limited. The ground station may be configured to forward signaling and service data between the network device and a core network.

In still another example, refer to FIG. 1d. The network device may be a flight platform. A communication system shown in FIG. 1d may further include an access network device disposed on the ground. The terminal device and the access network device may communicate with each other by forwarding a signal on the flight platform. Specifically, the flight platform may communicate with the access network device through an NG interface. The flight platform may be a transmission/reception point (transmission/reception point, TRP) that provides wireless access for the terminal device. The TRP may transparently transmit data between the terminal device and the access network device. In this way, a communication connection between the terminal device and the access network device is implemented. In this case, it may be described as that the flight platform works in a transparent (transparent) mode. In addition, when the communication system includes a plurality of flight platforms, signaling interaction and data transmission may be performed between the flight platforms through an Xn interface, and a communication link between the flight platform and the terminal device may be referred to as a service link. A communication link between the flight platform and the access network device is referred to as a feeder link. It should be noted that the access network device may also be described as a gateway, a ground station, or the like. This is not limited. The ground station may be configured to forward signaling and service data between the network device and a core network.

The foregoing access network device may be any device with a wireless transceiver function, and is mainly configured to implement functions such as a wireless physical control function, resource scheduling, radio resource management, radio access control, and mobility management, and provide a reliable wireless transmission protocol, a data encryption protocol, and the like. Specifically, the access network device may be a device that supports wired access, or may be a device that supports wireless access. For example, the access network device may be an access network (access network, AN)/radio access network (radio access network, RAN) device, and includes a plurality of 5G-AN/5G-RAN nodes. The 5G-AN/5G-RAN node may be: an access point (access point, AP), a NodeB (NodeB, NB), an enhanced NodeB (enhance NodeB, eNB), a next-generation NodeB (NR NodeB, gNB), a transmission reception point (transmission reception point, TRP), a transmission point (transmission point, TP), another access node, or the like.

The flight platform may be aircraft such as a satellite or an uncrewed aerial vehicle. For example, the flight platform may include a geostationary orbit satellite, a non-geostationary orbit satellite, a low-orbit satellite, a medium-orbit satellite, a geosynchronous orbit satellite, an unmanned flight system platform, a high-orbit satellite, or the like. This is not limited.

In addition, in FIG. 1b to FIG. 1d, the communication system may further include a ground station, a core network device, and a data network (data network, DN). The network device may exchange signaling such as NAS, transmit data, and the like with the core network device through the NG interface by using the ground station.

The core network device may be configured to send, to the data network, data of the terminal device that is sent by the network device. Specifically, the core network device may be configured to implement services such as user access control, mobility management, session management, user security authentication, and charging. The core network device may include a plurality of functional units. For example, the core network device may be divided into functional entities of a control plane and a data plane. The functional entity of the control plane may include an access and mobility management unit (access and mobility management function, AMF), a session management unit (session management function, SMF), and the like. The functional entity of the data plane may include a user plane unit (user plane function, UPF), and the like.

The access and mobility management unit is mainly responsible for user equipment access management, security authentication, mobility management, signaling interaction between functional network elements, and the like, for example, managing a registration status of a user, connection status of user, user registration and network access, tracking area update, user authentication during cell handover, and key security.

The session management unit may also be referred to as a session management function, a multicast/multicast service management function (multicast/broadcast-service management function, MB-SMF), a multicast session management network element, or the like. This is not limited. The session management network element is mainly configured to implement a user plane transmission logical channel, such as session management functions such as establishment, release, and change of a packet data unit (packet data unit, PDU) session.

The user plane unit may also be referred to as a PDU session anchor (PSF), a user plane function, or a multicast/multicast user plane function (multicast/broadcast user plane function, MB-UPF). A user plane network element may serve as an anchor on the user plane transmission logical channel, and is mainly configured to implement functions such as routing and forwarding of user plane data. For example, the user plane unit establishes a channel (that is, the user plane transmission logical channel) between the user plane unit and the terminal, forwards a data packet between the terminal device and the DN on the channel, and is responsible for data packet filtering, data forwarding, rate control, generation of charging information, traffic statistics, and the like for the terminal. A multicast/broadcast (multicast/broadcast, MB) service controller (MB service controller) has service management functions such as group management, security management, and service bulletins.

It should be noted that, in addition to the foregoing units, the core network device may further include a policy control function (policy control function, PCF), an application function (application function, AF), and the like. This is not limited.

The data network may be an operator network that provides a data transmission service for the terminal device. For example, the data network may be an operator network that provides an IP multimedia service (IP multi-media service, IMS) and the like to the terminal device. An application server (application server, AS) may be deployed in the DN, and the application server may provide the data transmission service for the terminal device.

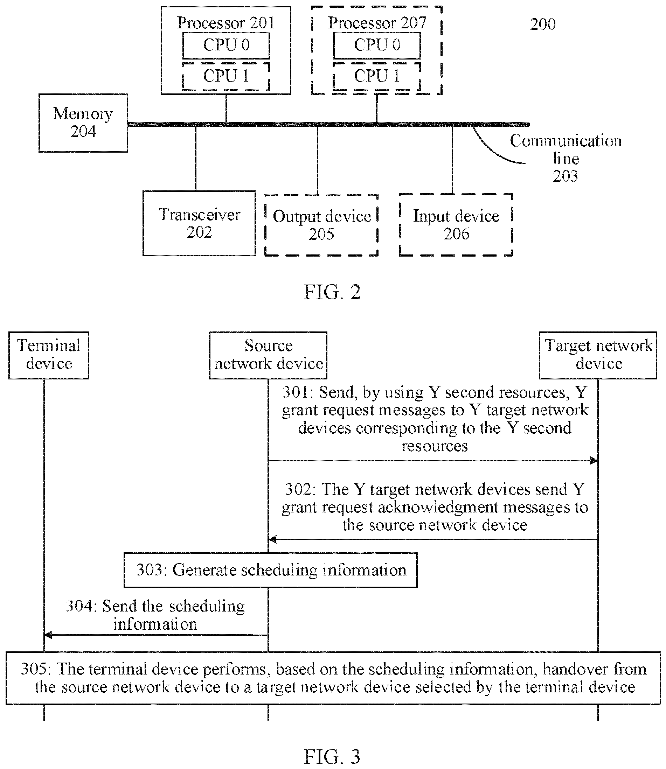

During specific implementation, as shown in FIG. 1a to FIG. 1d, for example, each terminal device and each network device may use a composition structure shown in FIG. 2, or may include components shown in FIG. 2. FIG. 2 is a schematic composition diagram of a communication apparatus 200 according to an embodiment of this application. The communication apparatus 200 may be a terminal device, or a chip or a system on chip in the terminal device, or may be a network device, or a chip or a system on chip in the network device. As shown in FIG. 2, the communication apparatus 200 includes a processor 201, a transceiver 202, and a communication line 203.

Further, the communication apparatus 200 may further include a memory 204. The processor 201, the memory 204, and the transceiver 202 may be connected through a communication line 203.

The processor 201 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 201 may be another apparatus having a processing function, for example, a circuit, a component, or a software module. This is not limited.

The transceiver 202 is configured to communicate with another device or another communication network. The another communication network may be an Ethernet, a radio access network (radio access network, RAN), a wireless local area network (wireless local area networks, WLAN), or the like. The transceiver 202 may be a module, a circuit, a transceiver, or any apparatus that can implement communication.

The communication line 203 is configured to transmit information between the parts included in the communication apparatus 200.

The memory 204 is configured to store instructions. The instructions may be a computer program.

The memory 204 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), magnetic disk storage medium or another magnetic storage device, or the like. This is not limited.

It should be noted that the memory 204 may exist independently of the processor 201, or may be integrated with the processor 201. The memory 204 may be configured to store instructions, program code, some data, or the like. The memory 204 may be located in the communication apparatus 200, or may be located outside the communication apparatus 200. This is not limited. The processor 201 is configured to execute the instructions stored in the memory 204, to implement the wireless communication method provided in the following embodiments of this application.

In an example, the processor 201 may include one or more CPUs, for example, a CPU 0 and a CPU 1 in FIG. 2.

In an optional implementation, the communication apparatus 200 includes a plurality of processors. For example, in addition to the processor 201 in FIG. 2, the communication apparatus 200 may further include a processor 207.

In an optional implementation, the communication apparatus 200 further includes an output device 205 and an input device 206. For example, the input device 206 is a device such as a keyboard, a mouse, a microphone, or a joystick, and the output device 205 is a device such as a display or a speaker (speaker).

It should be noted that the communication apparatus 200 may be a desktop computer, a portable computer, a network server, a mobile phone, a tablet computer, a wireless terminal, an embedded device, a chip system, or a device having a similar structure in FIG. 2. In addition, the composition structure shown in FIG. 2 does not constitute a limitation on the communication apparatus. In addition to the parts shown in FIG. 2, the communication apparatus may include more or fewer parts than the parts shown in the figure, or some parts may be combined, or there may be a different part layout.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication systems shown in FIG. 1a to FIG. 1d, the following describes a wireless communication method provided in an embodiment of this application with reference to FIG. 3. The terminal device may be any terminal device in any one of communication systems shown in FIG. 1a to FIG. 1d. The source network device may be a network device accessed by the terminal device in any one of communication systems in FIG. 1a to FIG. 1d. The target network device may be any network device except the source network device in any one of the communication systems in FIG. 1a to FIG. 1d. The terminal device, the source network device, and the target network device in the following embodiments may all have the components shown in FIG. 2.

FIG. 3 is a flowchart of a wireless communication method according to an embodiment of this application. As shown in FIG. 3, the method may include the following steps.

Step 301: The source network device sends, by using Y second resources, Y grant request messages to Y target network devices corresponding to the Y second resources.

A j^{th} second resource may be a resource that is reserved by a j^{th} target network device and that is used to receive a j^{th} grant request message, Y is greater than or equal to 1, and 1≤j≤Y.

The second resource may include one or more of the following: a time domain resource, a frequency domain resource, a code resource, a beam resource, and the like. It should be noted that different target network devices may correspond to different second resources, and sizes of the different second resources may also be different.

Optionally, the second resource is allocated to the target network device through calculation based on identification information of the target network device.

For example, the source network device may determine the Y target network devices in any one of the following Manner 1 to Manner 3.

Manner 1: The source network device may determine the Y target network devices based on communication parameters of the terminal device.

The communication parameter of the terminal device may include visual time of the terminal device relative to a network device. The visual time of the terminal device relative to the network device may also be described as visual time, visual time of the terminal device, top-of-the-line time of the terminal device relative to the network device, or the like. This is not limited.

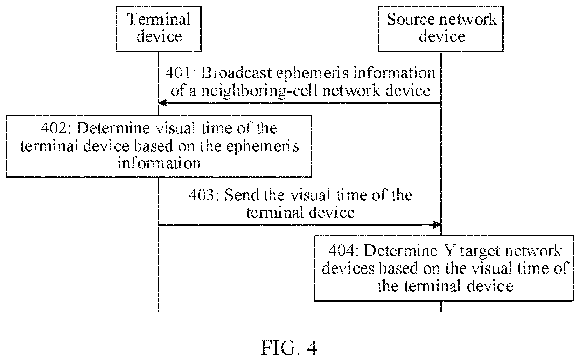

For example, as shown in FIG. 4, the source network device may determine the Y target network devices based on the visual time of the terminal device with reference to the following method shown in FIG. 4.

FIG. 4 is a flowchart of a method for determining a target network device according to an embodiment of this application. As shown in FIG. 4, the method may include the following steps.

Step 401: The source network device broadcasts ephemeris information of a neighboring-cell network device. Correspondingly, the terminal device may receive the ephemeris information of the neighboring-cell network device broadcast by the source network device.

There may be one or more neighboring-cell network devices of the source network device. This is not limited.

The ephemeris information of the network device may indicate position information of the network device. The ephemeris information may be in a form of a Kepler orbital parameter, or may be in a form of PVT. The PVT may indicate a position (position), a velocity (velocity), and time (time) of the network device in a specific coordinate system.

For example, the source network device may maintain ephemeris information of each network device in a global navigation satellite system (global navigation satellite system, GNSS) by using the GNSS, and broadcast the ephemeris information of the neighboring-cell network device. Alternatively, the source network device may receive, through an Xn interface, the ephemeris information sent by the neighboring-cell network device, and broadcast the ephemeris information.

Optionally, the source network device adds the ephemeris information of the neighboring-cell network device to a system information block (system information block, SIB) for broadcasting.

Step 402: The terminal device determines the visual time of the terminal device based on the ephemeris information.

Because the network device gradually approaches the terminal device and then moves away from the terminal device in a movement process, signal strength of a signal, of the network device, received by the terminal device undergoes a process of changing from weak to strong, and then changing from strong to weak. The terminal device may determine, based on the signal strength of the received signal of the network device, a moment corresponding to a signal whose signal strength is exactly greater than or equal to a preset strength threshold as a first moment in a process in which the signal strength changes from weak to strong, determine a moment corresponding to a signal whose signal strength is exactly less than or equal to the preset strength threshold as a second moment in a process in which the signal strength changes from strong to weak, and determine a difference between the first moment and the second moment as the visual time of the terminal device relative to the network device.

For example, the neighboring-cell network device includes a network device 1, a network device 2, a network device 3, and a network device 4. With reference to the foregoing description of the visual time, the terminal device determines visual time 1 of the terminal device relative to the network device 1, visual time 2 of the terminal device relative to the network device 2, visual time 3 of the terminal device relative to the network device 3, and visual time 4 of the terminal device relative to the network device 4.

Step 403: The terminal device sends the visual time of the terminal device to the source network device.

The terminal device may send, to the source network device, visual time of all neighboring-cell network devices of the source network device corresponding to the terminal device, so that the source network device selects the Y target network devices from the neighboring-cell network devices based on the visual time sent by the terminal device.

Step 404: The source network device determines the Y target network devices based on the visual time of the terminal device.

Y is greater than or equal to 1.

For example, after receiving the visual time of the terminal device, the source network device may determine a network device corresponding to a maximum value of the visual time of the terminal device as a target network device, or may determine a network device corresponding to visual time, of the terminal device, that is greater than a preset time threshold as a target network device.

For example, the visual time of the terminal device includes visual time 1, visual time 2, visual time 3, and visual time 4. Assuming that the visual time 1>the visual time 3>the visual time 4>the visual time 2, the source network device may determine a network device corresponding to the visual time 1 as the target network device.

For another example, the visual time of the terminal device includes the visual time 1, the visual time 2, the visual time 3, and the visual time 4. Assuming that the visual time 1>the visual time 3>the visual time 4>the preset time threshold>the visual time 2, the source network device may determine a network device corresponding to the visual time 1, a network device corresponding to the visual time 3, and a network device corresponding to the visual time 4 as target network devices.

Manner 2: The source network device may determine the Y target network devices based on load of the network device.

For example, the source network device may determine, based on load of each neighboring-cell network device, a network device with light load as a target network device, or determine a network device with load being less than a preset load threshold as a target network device.

The source network device may obtain, by using a GNSS system, a load size of each neighboring-cell network device, or may obtain, through an Xn interface, a load size sent by each neighboring-cell network device.

It should be noted that Manner 1 and Manner 2 may also be used in combination. To be specific, the source network device may properly determine the Y target network devices based on the visual time of the terminal device and the load of each neighboring-cell network device.

Manner 3: The source network device may receive second information from the terminal device. The second information indicates the Y target network devices.

The second information may include one or more types of the following information of each of the Y target network devices: identification information, signal quality, and beam information of a downlink beam. The beam information of the downlink beam may include identification information of the downlink beam and/or signal quality of the downlink beam.

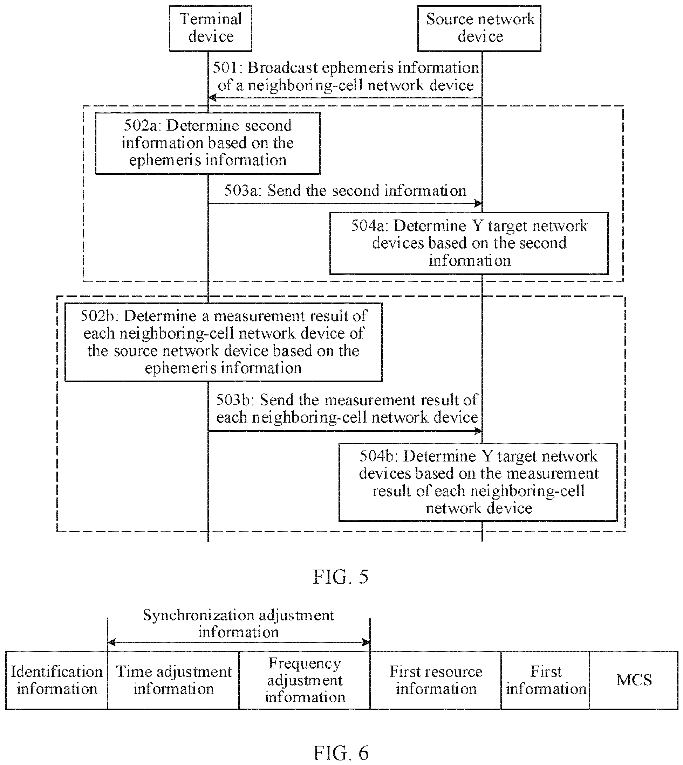

For example, as shown in FIG. 5, the source network device may determine the Y target network devices based on the second information with reference to the following method shown in FIG. 5.

FIG. 5 is a flowchart of a method for determining a target network device according to an embodiment of this application. As shown in FIG. 5, the method may include the following steps.

Step 501: The source network device broadcasts ephemeris information of a neighboring-cell network device. Correspondingly, the terminal device may receive the ephemeris information of the neighboring-cell network device broadcast by the source network device.

For the description of step 501, refer to the specific description of step 401. Details are not described herein again.

Step 502a: The terminal device determines the second information based on the ephemeris information.

The terminal device may measure, based on the ephemeris information, a downlink signal and/or a downlink beam sent by each neighboring-cell network device of the source network device, to obtain a measurement result of each network device, and determine the Y target network devices based on the measurement result of each network device. Measurement results of the Y target network devices are determined as the second information.

The measurement result of the network device may include identification information of the network device, signal quality of the network device, and beam information of a downlink beam of the network device.

The signal quality may be a parameter that can indicate signal quality, such as reference signal received power (reference signal received power, RSRP) or reference signal received quality (reference signal received quality, RSRQ). The beam information of the downlink beam may include identification information of the downlink beam and/or signal quality of the downlink beam.

For example, the terminal device may determine a network device whose signal quality and/or signal quality of the downlink beam is greater than a preset quality threshold as a target network device.

Step 503a: The terminal device sends the second information to the source network device.

Step 504a: The source network device determines the Y target network devices based on the second information.

It should be noted that the foregoing step 502a to step 504a may also be replaced with the following step 502b to step 504b.

Step 502b: The terminal device determines a measurement result of each neighboring-cell network device of the source network device based on the ephemeris information.

For description of the measurement result, refer to the description of the measurement result in step 502a. Details are not described again.

Step 503b: The terminal device sends the measurement result of each neighboring-cell network device to the source network device.

Step 504b: The source network device determines the Y target network devices based on the measurement result of each neighboring-cell network device.

For example, the source network device may determine, based on the measurement result of each neighboring-cell network device, a network device whose signal quality and/or signal quality of the downlink beam is greater than a preset quality threshold as a target network device.

Based on the foregoing Manner 1 to Manner 3, after determining the Y target network devices, the source network device may update time-frequency relationships between the source network device and the Y target network devices.

The source network device may update the time-frequency relationships between the source network device and the Y target network devices by obtaining Y first timing offsets between the source network device and the Y target network devices.

A j^{th} first timing offset is a timing offset between the source network device and the j^{th} target network device.

The first timing offset may be an absolute time, or may be a system frame number (system frame number, SFN), a timeslot, or the like. This is not limited.

In a possible design, the source network device sends Y synchronization requests to the Y target network devices based on the communication parameters of the terminal device, and receives the Y first timing offsets from the Y target network devices.

For example, the source network device may obtain the communication parameters of the terminal device, map the communication parameters of the terminal device to local analog terminals based on the communication parameters of the terminal device, and send the Y synchronization requests to the Y target network devices by using an inter-satellite air interface link. The analog terminal may also be described as a virtual terminal.

The communication parameter of the terminal device may include one or more of the following: signal quality, user service class, service type, communication requirement, and transmit power. This is not limited.

It should be noted that when a plurality of terminal devices in a network need to perform cell handover, the source network device may map the plurality of terminal devices to a plurality of local analog terminals, and initiate a synchronization procedure to the target network device in a packet, to reduce signaling overheads.

In another possible design, the source network device sends Y synchronization requests to the Y target network devices based on the communication parameters of the terminal device, and receives Y second timing offsets from the Y target network devices. The source network device determines the Y first timing offsets based on the Y second timing offsets and a timing offset between the source network device and an absolute time.

A j^{th} second timing offset is a timing offset between the j^{th} target network device and the absolute time. The absolute time may be an absolute time of the GNSS system.

The second timing offset or the timing offset between the source network device and the absolute time may be an absolute time, or may be a system frame number (system frame number, SFN), a timeslot, or the like. This is not limited.

Based on the foregoing two possible designs, the Y target network devices may reserve Y second resources for analog terminals that complete synchronization, so that the source network device sends, based on the analog terminals by using the Y second resources, the Y grant request messages to the Y target network devices corresponding to the Y second resources.

The grant request message may include a buffer status report (buffer status report, BSR) of a user.

Step 302: The Y target network devices send Y grant request acknowledgment messages to the source network device.

A j^{th} grant request acknowledgment message may indicate a grant of the j* target network device for a j^{th} first resource. The j^{th} first resource may be a resource that is reserved by the j^{th} target network device for the terminal device and that is used to access the j^{th} target network device.

The first resource may include one or more of the following: a time domain resource, a frequency domain resource, a code resource, a beam resource, and the like. Different target network devices may correspond to different second resources and sizes of the different second resources may also be different.

For example, after receiving a grant request message, each target network device may perform admission control based on a load resource status of the target network device itself, and return an authorization request acknowledgment message to the source network device.

Step 303: The source network device generates scheduling information.

Step 304: The source network device sends the scheduling information to the terminal device.

The scheduling information indicates first resource information corresponding to at least one target network device.

For example, the scheduling information may indicate X pieces of first resource information corresponding to X target network devices, an i^{th} first resource is a resource that is reserved by an i^{th} target network device for the terminal device and that is used to access the i^{th} target network device, X is greater than or equal to 1, X is less than and equal to Y, and 1≤i≤X.

The source network device may determine the X target network based on the Y grant request acknowledgment messages corresponding to the Y target network devices, and send the first resource information corresponding to the X target network devices to the terminal device.

Further, the scheduling information may further include one or more types of the following information of the X target network devices: identification information, synchronization adjustment information, first information, and a modulation and coding scheme MCS.

The identification information may indicate the target network device. The synchronization adjustment information may be used by the terminal device to perform synchronization adjustment with a target network device corresponding to the synchronization adjustment information. The first information may indicate a handover moment at which the terminal device accesses a target network device corresponding to the first information.

For example, the synchronization adjustment information may include time adjustment information (timing adjust) and/or frequency adjustment information (frequency adjust), and the like. The time adjustment information may be a first timing offset between the source network device and the target network device.

For example, the first information may directly indicate the handover moment at which the terminal device accesses the target network device corresponding to the first information. For example, the first information is an absolute time value. Alternatively, the first information may indirectly indicate the handover moment at which the terminal device accesses the target network device corresponding to the first information. For example, the first information may be a relative time value.

Optionally, the relative time value is a time interval between a time when the scheduling information is delivered and a time when the scheduling information takes effect.

For example, the scheduling information indicates first resource information corresponding to one target network device. As shown in FIG. 6, the scheduling information may include identification information, synchronization adjustment information, first resource information, first information, and an MCS. The synchronization adjustment information may include time adjustment information and frequency adjustment information.

It should be noted that when the scheduling information indicates the first resource information corresponding to the one target network device, and the target network device is specified by the terminal device to the source network device, the scheduling information may not need to include the identification information, to reduce signaling overheads.

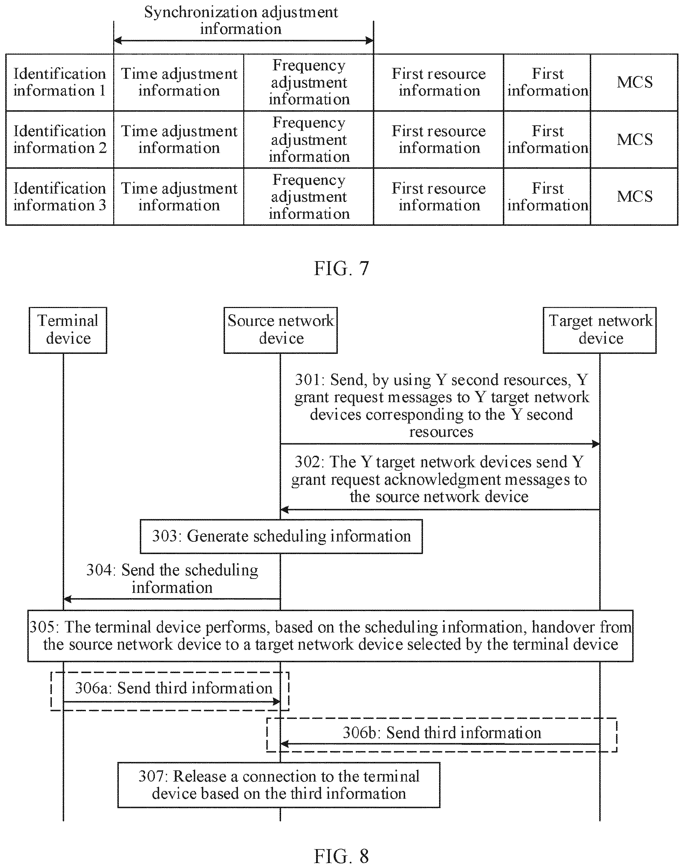

For example, the scheduling information indicates first resource information corresponding to a target network device 1, first resource information corresponding to a target network device 2, and first resource information corresponding to a target network device 3. As shown in FIG. 7, the scheduling information may include the following information of each target network device: identification information, synchronization adjustment information, first resource information, first information, and an MCS. The synchronization adjustment information may include time adjustment information and frequency adjustment information.

Optionally, the scheduling information is carried in downlink control information (downlink control information, DCI), a media access control control element (media access control control control element, MAC CE), or RRC signaling.

The source network device may add a new DCI format to carry the scheduling information. Alternatively, a new field may be added to an existing DCI format to carry the scheduling information. This is not limited.

Optionally, when the scheduling information carried in the DCI indicates the first resource information corresponding to the X target network devices, the DCI may be set to a fixed length, to avoid a parsing failure of the terminal device due to unequal lengths of the DCI.

For example, the length of the DCI is set to be that first resource information corresponding to a maximum of three target network devices can be sent by using the DCI. Assuming that the source network device determines to send first resource information corresponding to two target network devices to the terminal device, the source network device may set a field corresponding to a third target network device in the DCI to 0, so that the third target network device does not exist in the DCI by default.

Step 305: The terminal device performs, based on the scheduling information, handover from the source network device to a target network device selected by the terminal device.

The target network device selected by the terminal device may be one of the X target network devices.

For example, when the scheduling information indicates the first resource information corresponding to the one target network device, the terminal device may determine the target network device as a target network device to be accessed by the terminal device. When the scheduling information indicates first resource information corresponding to a plurality of target network devices, the terminal device may select one target network device from the plurality of target network devices as a target network device to be accessed by the terminal device.

For example, the terminal device may select the target network device based on one or more types of the following information of the X target network devices: signal quality, beam information of a downlink beam, and visual time corresponding to the terminal device.

The beam information of the downlink beam may include identification information of the downlink beam and/or signal quality of the downlink beam.

Further, after determining the to-be-accessed target network device, the terminal device may complete coarse synchronization between the terminal device and the to-be-accessed target network device based on the GNSS system and ephemeris information of the to-be-accessed target network device, complete fine synchronization between the terminal device and the to-be-accessed target network device based on related information of the to-be-accessed network device in the scheduling information, and then access the target network device to continue communication.

For example, the terminal device may send an access request to the to-be-accessed target network device, so that the to-be-accessed target network device establishes a communication connection to the terminal device based on the access request, thereby implementing handover of the terminal device from the source network device to the target network device.

Based on the foregoing embodiments shown in FIG. 3 to FIG. 7, synchronization and a resource grant that are required when the terminal device hands over to the target network device may be obtained by the source network device from the target network device in advance, so that the terminal device can directly hand over, based on the scheduling information sent by the source network device, to the target network device selected by the terminal device, thereby avoiding a random access process between the terminal device and the target network device, ensuring communication continuity of the terminal device, and improving communication performance of a communication system.

Still further, as shown in FIG. 8, after the terminal device hands over to the target network device, the wireless communication method shown in this embodiment of this application may further include the following step 306a and step 307, or include the following step 306b and step 307.

Step 306a: The terminal device sends third information to the source network device.

The third information may indicate the terminal device to hand over to the target network device selected by the terminal device.

It should be noted that the foregoing step 305a may also be replaced with the following step 305b.

Step 306b: The target network device sends third information to the source network device.

The third information may indicate the terminal device to hand over to the target network device.

Step 307: The source network device releases a connection to the terminal device based on the third information.

Based on the method shown in FIG. 8, the source network device may receive the third information sent by the terminal device, or may receive the third information sent by the target network device, and release the connection to the terminal device based on the third information, thereby reducing signaling overheads and reducing communication load of the source network device.

The solutions provided in embodiments of this application are mainly described above from a perspective of interaction between the devices. It may be understood that, to implement the foregoing functions, each device includes a corresponding hardware structure and/or a corresponding software module for performing each function. A person skilled in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In embodiments of this application, functional modules of each device may be obtained through division based on the foregoing method example. For example, each function module may be obtained through division based on each function, or two or more functions may be integrated into one processing module. The integrated module may be implemented in a form of hardware, or may be implemented in a form of a software functional module. It should be noted that the module division in embodiments of this application is an example, and is merely logical function division. There may be another division manner in an actual implementation.

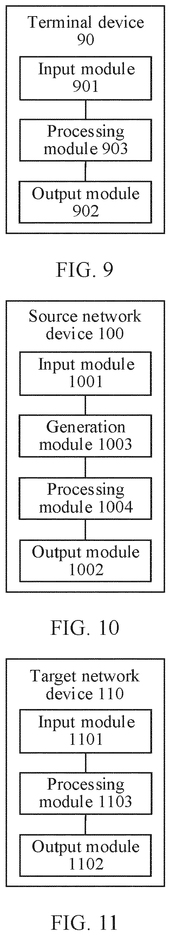

When each function module is obtained through division based on each corresponding function, FIG. 9 shows a terminal device. The terminal device 90 may include an input module 901, an output module 902, and a processing module 903. For example, the terminal device 90 may be a terminal device, or may be a chip used in the terminal device or another combined component or part having a function of the terminal device. When the terminal device 90 is a terminal device, the input module 901 and the output module 902 may be transceivers, and the transceiver may include an antenna, a radio frequency circuit, and the like. The processing module 903 may be a processor (or a processing circuit), for example, a baseband processor. The baseband processor may include one or more CPUs. When the terminal device 90 is the part having the function of the foregoing terminal device, the input module 901 and the output module 902 may be radio frequency units. The processing module 903 may be a processor (or a processing circuit), for example, a baseband processor. When the terminal device 90 is a chip system, the input module 901 and the output module 902 may be input/output interfaces of a chip (for example, a baseband chip). The processing module 903 may be a processor (or a processing circuit) of the chip system, and may include one or more central processing units. It should be understood that the input module 901 and the output module 902 in embodiments of this application may be implemented by a transceiver or a transceiver-related circuit component. The processing module 903 may be implemented by a processor or a processor-related circuit component (or referred to as a processing circuit).

For example, the input module 901 and the output module 902 may be configured to perform all receiving and sending operations performed by the terminal device in embodiments shown in FIG. 3 to FIG. 8, and/or configured to support another process of the technology described in this specification. The processing module 903 may be configured to perform all operations other than the receiving and sending operations performed by the terminal device in embodiments shown in FIG. 3 to FIG. 8, and/or configured to support another process of the technology described in this specification.

In another possible implementation, the input module 901 and the output module 902 in FIG. 9 may be replaced by a transceiver, and the transceiver may integrate functions of the input module 901 and the output module 902. The processing module 903 may be replaced by a processor, and the processor may integrate functions of the processing module 903. Further, the terminal device 90 shown in FIG. 9 may further include a memory. When the input module 901 and the output module 902 are replaced by the transceiver, and the processing module 903 is replaced by the processor, the terminal device 90 in embodiments of this application may be the communication apparatus shown in FIG. 2.

When each function module is obtained through division based on each corresponding function, FIG. 10 shows a source network device. The source network device 100 may include an input module 1001, an output module 1002, a generation module 1003, and a processing module 1004. For example, the source network device 100 may be a source network device, or may be a chip used in the source network device or another combined component or part having a function of the source network device. When the source network device 100 is the source network device, the input module 1001 and the output module 1002 may be transceivers, the transceiver may include an antenna, a radio frequency circuit, and the like, and the generation module 1003 and the processing module 1004 may be processors (or processing circuits), for example, baseband processors. The baseband processor may include one or more CPUs. When the source network device 100 is the part having the function of the source network device, the input module 1001 and the output module 1002 may be radio frequency units, and the generation module 1003 and the processing module 1004 may be processors (or processing circuits), for example, baseband processors. When the source network device 100 is a chip system, the input module 1001 and the output module 1002 may be input/output interfaces of a chip (for example, a baseband chip), and the generation module 1003 and the processing module 1004 may be processors (or processing circuits) of the chip system, and may include one or more central processing units. It should be understood that the input module 1001 and the output module 1002 in embodiments of this application may be implemented by a transceiver or a transceiver-related circuit component, and the generation module 1003 and the processing module 1004 may be implemented by a processor or a processor-related circuit component (or referred to as a processing circuit).

For example, the input module 1001 and the output module 1002 may be configured to perform all receiving and sending operations performed by the source network device in embodiments shown in FIG. 3 to FIG. 8, and/or configured to support another process of the technology described in this specification. The generation module 1003 and the processing module 1004 may be configured to perform all operations other than the receiving and sending operations performed by the source network device in embodiments shown in FIG. 3 to FIG. 8, and/or configured to support another process of the technology described in this specification.

In still another possible implementation, the input module 1001 and the output module 1002 in FIG. 10 may be replaced by a transceiver, and the transceiver may integrate functions of the input module 1001 and the output module 1002. The generation module 1003 and the processing module 1004 may be replaced by a processor, and the processor may integrate functions of the generation module 1003 and the processing module 1004. Further, the source network device 100 shown in FIG. 10 may further include a memory. When the input module 1001 and the output module 1002 are replaced by the transceiver, and the generation module 1003 and the processing module 1004 are replaced by the processor, the source network device 100 in embodiments of this application may be the communication apparatus shown in FIG. 2.

When each function module is obtained through division based on each corresponding function, FIG. 11 shows a target network device. The target network device 110 may include an input module 1101, an output module 1102, and a processing module 1103. For example, the target network device 110 may be a target network device, or may be a chip used in the target network device or another combined component or part having a function of the target network device. When the target network device 110 is a target network device, the input module 1101 and the output module 1102 may be transceivers, and the transceiver may include an antenna, a radio frequency circuit, and the like. The processing module 1103 may be a processor (or a processing circuit), for example, a baseband processor. The baseband processor may include one or more CPUs. When the target network device 110 is the part having the function of the foregoing target network device, the input module 1101 and the output module 1102 may be radio frequency units. The processing module 1103 may be a processor (or a processing circuit), for example, a baseband processor. When the target network device 110 is a chip system, the input module 1101 and the output module 1102 may be input/output interfaces of a chip (for example, a baseband chip). The processing module 1103 may be a processor (or a processing circuit) of the chip system, and may include one or more central processing units. It should be understood that the input module 1101 and the output module 1102 in embodiments of this application may be implemented by a transceiver or a transceiver-related circuit component. The processing module 1103 may be implemented by a processor or a processor-related circuit component (or referred to as a processing circuit).

For example, the input module 1101 and the output module 1102 may be configured to perform all receiving and sending operations performed by the target network device in embodiments shown in FIG. 3 to FIG. 8, and/or configured to support another process of the technology described in this specification. The processing module 1103 may be configured to perform all operations other than the receiving and sending operations performed by the target network device in embodiments shown in FIG. 3 to FIG. 8, and/or configured to support another process of the technology described in this specification.

In yet another possible implementation, the input module 1101 and the output module 1102 in FIG. 11 may be replaced by a transceiver, and the transceiver may integrate functions of the input module 1101 and the output module 1102. The processing module 1103 may be replaced by a processor, and the processor may integrate functions of the processing module 1103. Further, the target network device 110 shown in FIG. 11 may further include a memory. When the input module 1101 and the output module 1102 are replaced by the transceiver, and the processing module 1103 is replaced by the processor, the target network device 110 in embodiments of this application may be the communication apparatus shown in FIG. 2.

An embodiment of this application further provides a computer-readable storage medium. All or some of the procedures in the foregoing method embodiment may be completed by a computer program instructing relevant hardware. The program may be stored in the foregoing computer-readable storage medium. When the program is executed, the procedures in the foregoing method embodiment may be included. The computer-readable storage medium may be an internal storage unit in the terminal in any one of the foregoing embodiments (including a data transmit end and/or a data receive end), for example, a hard disk or memory of the terminal. The foregoing computer-readable storage medium may also be an external storage device of the foregoing terminal, for example, a plug-in hard disk, a smart memory card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that the terms "first", "second", and the like in the specification, claims, and accompanying drawings of this application are intended to distinguish between different objects, but are not intended to describe a particular order. In addition, terms such as "including" and "having" and any other variants thereof are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device.

It should be understood that in this application, "at least one (item)" refers to one or more, "a plurality of" refers to two or more, "at least two (items)" refers to two or three or more, and "and/or" is used to describe an association relationship between associated objects, and indicates that three relationships may exist. For example, "A and/or B" may indicate that only A exists, only B exists, and both A and B exist. A and B may be singular or plural. A character "/" usually indicates an "or" relationship between the associated objects. "At least one of the following" or a similar expression thereof indicates any combination of the following, including any combination of one or more of the following. For example, at least one of a, b, or c may represent: a, b, c, "a and b", "a and c", "b and c", or "a and b and c", where a, b, and c may be one or more.

The foregoing descriptions about implementations allow a person skilled in the art to understand that, for the purpose of convenient and brief description, division into the foregoing functional modules is used as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application should be subject to the protection scope of the claims.

## Claims

1. A wireless communication method, comprising:
receiving, by a terminal device, scheduling information from a source network device, wherein the scheduling information indicates X pieces of first resource information corresponding to X target network devices, an i^{th} first resource is a resource that is reserved by an i^{th} target network device for the terminal device and that is used to access the i^{th} target network device, X is greater than or equal to 1, and 1≤i≤X; and
performing, by the terminal device based on the scheduling information, handover from the source network device to a target network device selected by the terminal device, wherein the target network device selected by the terminal device is one of the X target network devices.

2. The method according to claim 1, wherein
the scheduling information further comprises one or more types of the following information of each of the X target network devices: identification information, synchronization adjustment information, first information, and a modulation and coding scheme MCS, wherein the synchronization adjustment information is used by the terminal device to perform synchronization adjustment with a target network device corresponding to the synchronization adjustment information, and the first information indicates a handover moment at which the terminal device accesses a target network device corresponding to the first information.

3. The method according to claim 1 or 2, wherein
the scheduling information is carried in at least one of the following signaling: downlink control information DCI signaling, media access control control element MAC CE signaling, and radio resource control RRC signaling.

4. The method according to any one of claims 1 to 3, wherein
selecting, by the terminal device, one target network device based on one or more types of the following information of each of the X target network devices: signal quality, beam information of a downlink beam, and visual time corresponding to the terminal device, wherein the beam information of the downlink beam comprises one or more types of the following information: identification information of the downlink beam and signal quality of the downlink beam.

5. The method according to any one of claims 1 to 4, wherein before the receiving, by a terminal device, scheduling information from a source network device, the method further comprises:
sending, by the terminal device, second information to the source network device, wherein the second information indicates Y target network devices, and Y is greater than or equal to X.

6. The method according to claim 5, wherein
the second information comprises one or more types of the following information of each of the Y target network devices: identification information, signal quality, and beam information of a downlink beam, wherein the beam information of the downlink beam comprises one or more types of the following information: identification information of the downlink beam and signal quality of the downlink beam.

7. The method according to any one of claims 1 to 6, wherein the method further comprises:
sending, by the terminal device, third information to the source network device, wherein the third information indicates the terminal device to hand over to the target network device selected by the terminal device.

8. A wireless communication method, comprising:
sending, by a source network device by using Y second resources, Y grant request messages to Y target network devices corresponding to the Y second resources, wherein a j^{th} second resource is a resource that is reserved by a j^{th} target network device and that is used to receive a j^{th} grant request message, Y is greater than or equal to 1, and 1≤j≤Y;
receiving, by the source network device, Y grant request acknowledgment messages from the Y target network devices, wherein a j^{th} grant request acknowledgment message indicates a grant of the j^{th} target network device for a j^{th} first resource, and the j^{th} first resource is a resource that is reserved by the j^{th} target network device for a terminal device and that is used to access the j^{th} target network device; and
sending, by the source network device, scheduling information to the terminal device, wherein the scheduling information indicates first resource information corresponding to at least one target network device.

9. The method according to claim 8, wherein before the sending, by a source network device by using Y second resources, Y grant request messages to Y target network devices corresponding to the Y second resources, the method further comprises:
obtaining, by the source network device, Y first timing offsets between the source network device and the Y target network devices, wherein a j^{th} first timing offset is a timing offset between the source network device and the j^{th} target network device.

10. The method according to claim 9, wherein the obtaining, by the source network device, Y first timing offsets between the source network device and the Y target network devices comprises:
sending, by the source network device, Y synchronization requests to the Y target network devices based on communication parameters of the terminal device; and
receiving, by the source network device, the Y first timing offsets from the Y target network devices.

11. The method according to claim 9, wherein the obtaining, by the source network device, Y first timing offsets between the source network device and the Y target network devices comprises:
receiving, by the source network device, Y second timing offsets from the Y target network devices, wherein a j^{th} second timing offset is a timing offset between the j^{th} target network device and an absolute time; and
determining, by the source network device, the Y first timing offsets based on the Y second timing offsets and a timing offset between the source network device and the absolute time.

12. The method according to any one of claims 8 to 11, wherein
the scheduling information further comprises one or more types of the following information of each of the at least one target network device: identification information, synchronization adjustment information, first information, and a modulation and coding scheme MCS, wherein the synchronization adjustment information is used by the terminal device to perform synchronization adjustment with a target network device corresponding to the synchronization adjustment information, and the first information indicates a handover moment at which the terminal device accesses a target network device corresponding to the first information.

13. The method according to any one of claims 8 to 12, wherein
the scheduling information is carried in at least one of the following signaling: downlink control information DCI signaling, media access control control element MAC CE signaling, and radio resource control RRC signaling.

14. The method according to any one of claims 8 to 13, wherein before the sending, by a source network device by using Y second resources, Y grant request messages to Y target network devices corresponding to the Y second resources, the method further comprises:
determining, by the source network device, the Y target network devices based on the communication parameters of the terminal device;
determining, by the source network device, the Y target network devices based on load of the network device; or
receiving, by the source network device, second information from the terminal device, wherein the second information indicates the Y target network devices.

15. The method according to claim 14, wherein
the second information comprises one or more types of the following information of each of the Y target network devices: identification information, signal quality, and beam information of a downlink beam, wherein the beam information of the downlink beam comprises one or more types of the following information: identification information of the downlink beam and signal quality of the downlink beam.

16. The method according to any one of claims 8 to 15, wherein the method further comprises:
obtaining, by the source network device, third information, wherein the third information indicates the terminal device to hand over to a target network device selected by the terminal device.

17. A wireless communication method, comprising:
receiving, by a target network device, a grant request message from a source network device by using a second resource, wherein the second resource is a resource that is reserved by the target network device and that is used to receive the grant request message; and
sending, by the target network device, a grant request acknowledgment message to the source network device, wherein the grant request acknowledgment message indicates a grant of the target network device for a first resource, and the first resource is a resource that is reserved by the target network device for a terminal device and that is used to access the target network device.

18. The method according to claim 17, wherein before the receiving, by a target network device, a grant request message from a source network device by using a second resource, the method further comprises:
receiving, by the target network device, a synchronization request from the source network device, wherein the synchronization request is determined by the source network device based on a communication parameter of the terminal device; and
sending, by the target network device, a first timing offset to the source network device based on the synchronization request, wherein the first timing offset is a timing offset between the source network device and the target network device.

19. The method according to claim 17, wherein before the receiving, by a target network device, a grant request message from a source network device by using a second resource, the method further comprises:
sending, by the target network device, a second timing offset to the source network device, wherein the second timing offset is a timing offset between the target network device and an absolute time.

20. The method according to any one of claims 17 to 19, wherein the method further comprises:
receiving, by the target network device, an access request from the terminal device, wherein the access request is determined by the terminal device based on scheduling information, and the scheduling information indicates first resource information corresponding to the target network device; and
establishing, by the target network device, a communication connection to the terminal device based on the access request.

21. The method according to claim 20, wherein
the scheduling information further comprises one or more types of the following information of the target network device: identification information, synchronization adjustment information, first information, and a modulation and coding scheme MCS, wherein the synchronization adjustment information is used by the terminal device to perform synchronization adjustment with a target network device corresponding to the synchronization adjustment information, and the first information indicates a handover moment at which the terminal device accesses a target network device corresponding to the first information.

22. The method according to claim 20 or 21, wherein the method further comprises:
sending, by the target network device, third information to the source network device, wherein the third information indicates the terminal device to hand over to the target network device.

23. A terminal device, comprising:
an input module, configured to receive scheduling information from a source network device, wherein the scheduling information indicates X pieces of first resource information corresponding to X target network devices, an i^{th} first resource is a resource that is reserved by an i^{th} target network device for the terminal device and that is used to access the i^{th} target network device, X is greater than or equal to 1, and 1≤i≤X; and
a processing module, configured to perform, based on the scheduling information, handover from the source network device to a target network device selected by the processing module, wherein the target network device selected by the processing module is one of the X target network devices.

24. The terminal device according to claim 23, wherein
the scheduling information further comprises one or more types of the following information of each of the X target network devices: identification information, synchronization adjustment information, first information, and a modulation and coding scheme MCS, wherein the synchronization adjustment information is used by the terminal device to perform synchronization adjustment with a target network device corresponding to the synchronization adjustment information, and the first information indicates a handover moment at which the terminal device accesses a target network device corresponding to the first information.

25. The terminal device according to claim 23 or 24, wherein
the scheduling information is carried in at least one of the following signaling: downlink control information DCI signaling, media access control control element MAC CE signaling, and radio resource control RRC signaling.

26. The terminal device according to any one of claims 23 to 25, wherein
the processing module is further configured to select one target network device based on one or more types of the following information of each of the X target network devices: signal quality, beam information of a downlink beam, and visual time corresponding to the terminal device, wherein the beam information of the downlink beam comprises one or more types of the following information: identification information of the downlink beam and signal quality of the downlink beam.

27. The terminal device according to any one of claims 23 to 26, wherein
before the input module receives the scheduling information from the source network device, an output module is configured to send second information to the source network device, wherein the second information indicates Y target network devices, and Y is greater than or equal to X.

28. The terminal device according to claim 27, wherein
the second information comprises one or more types of the following information of each of the Y target network devices: identification information, signal quality, and beam information of a downlink beam, wherein the beam information of the downlink beam comprises one or more types of the following information: identification information of the downlink beam and signal quality of the downlink beam.

29. The terminal device according to any one of claims 23 to 28, wherein
the output module is configured to send third information to the source network device, wherein the third information indicates the terminal device to hand over to the target network device selected by the terminal device.

30. A source network device, comprising:
an output module, configured to output, by using Y second resources, Y pieces of grant request message corresponding to Y target network devices, wherein a j^{th} second resource is a resource that is reserved by a j^{th} target network device and that is used to receive a j^{th} grant request message, Y is greater than or equal to 1, and 1≤j≤Y;
an input module, configured to receive Y grant request acknowledgment messages from the Y target network devices, wherein a j^{th} grant request acknowledgment message indicates a grant of the j^{th} target network device for a j^{th} first resource, and the j^{th} first resource is a resource that is reserved by the j^{th} target network device for a terminal device and that is used to access the j^{th} target network device; and
a generation module, configured to generate scheduling information, wherein the scheduling information indicates first resource information corresponding to at least one target network device, wherein
the output module is further configured to output the scheduling information.

31. A target network device, comprising:
an input module, configured to receive a grant request message from a source network device by using a second resource, wherein the second resource is a resource that is reserved by the target network device and that is used to receive the grant request message; and
an output module, configured to output a grant request acknowledgment message, wherein the grant request acknowledgment message indicates a grant of the target network device for a first resource, and the first resource is a resource that is reserved by the target network device for a terminal device and that is used to access the target network device.

32. A communication apparatus, wherein the communication apparatus comprises a processor;
and the processor is configured to run a computer program or instructions, so that the communication apparatus performs the wireless communication method according to any one of claims 1 to 7, performs the wireless communication method according to any one of claims 8 to 16, or performs the wireless communication method according to any one of claims 17 to 22.

33. The communication apparatus according to claim 32, wherein
the communication apparatus further comprises a memory, and the memory is configured to store the computer program or the instructions.

34. A communication apparatus, wherein the communication apparatus comprises an interface circuit and a logic circuit; the interface circuit is configured to obtain input information and/or output information; and the logic circuit is configured to perform the wireless communication method according to any one of claims 1 to 7, perform the wireless communication method according to any one of claims 8 to 16, or perform the wireless communication method according to any one of claims 17 to 22, and process and/or generate the output information based on the input information.

35. A computer-readable storage medium, wherein the computer-readable storage medium stores computer instructions or a program, and when the computer instructions or the program are/is run on a computer, the computer is enabled to perform the wireless communication method according to any one of claims 1 to 7, perform the wireless communication method according to any one of claims 8 to 16, or perform the wireless communication method according to any one of claims 17 to 22.

36. A computer program product, wherein the computer program product comprises computer instructions; and when some or all of the computer instructions are run on a computer, the computer is enabled to perform the wireless communication method according to any one of claims 1 to 7, perform the wireless communication method according to any one of claims 8 to 16, or perform the wireless communication method according to any one of claims 17 to 22.
